# EUROPEAN PATENT APPLICATION

(11) **EP 4 459 161 A1**
(43) Date of publication of application: **06.11.2024**
(21) Application number: 22923043.8
(22) Date of filing: 04.03.2022
(51) Int. Cl.: F16K 1/38, F16K 1/32, F16K 1/48, F16K 1/50, F16K 1/02, F25B 41/345

(54) **VALVE NEEDLE ASSEMBLY, ELECTRONIC EXPANSION VALVE, AND REFRIGERATION EQUIPMENT**

(30) Priority: 26.01.2022 CN 202210093235
(71) Applicant: Guangdong Welling Motor Manufacturing Co., Ltd., Foshan, Guangdong 528311 (CN)
(72) Inventor: CHEN, Chao, Foshan, Guangdong 528311 (CN); ZENG, Qingjun, Foshan, Guangdong 528311 (CN); YANG, Mao, Foshan, Guangdong 528311 (CN)
(74) Representative: RGTH
(86) International application number: PCT/CN2022/079334
(87) International publication number: WO 2023/142222

(57) **Abstract**

A valve needle assembly, an electronic expansion valve, and a refrigeration device. The valve needle assembly includes a valve needle (500), a bearing (600), and a valve rod (300). The valve needle (300) has a first end (501) and a second end (502) opposite to each other. The first end (501) is detachably mounted on a valve port (104) of the electronic expansion valve. The bearing (600) is fixedly mounted at the second end (502) by an outer ring. The valve rod (300) is inserted into an inner ring of the bearing (600). The technical solution aims to solve the technical problem in the related art that a valve needle is prone to abrasion due to the fact that the valve needle rotates relative to a valve port.

## Description

The present application claims priority to Chinese Patent Application No. 202210093235.4, filed on January 26, 2022, the entire contents of which are incorporated herein by reference.

### TECHNICAL FIELD

The present application relates to the technical field of electronic expansion valves, in particular to a valve needle assembly, an electronic expansion valve and a refrigeration device.

### BACKGROUND

At present, electronic expansion valves use the principle of stepping motors to drive the magnetic rotor to rotate through the coil, and convert the rotational motion of the magnetic rotor into the axial movement of the valve rod. The valve rod drives the valve needle connected to the valve rod to rise or fall, and controls the flow rate of the electronic expansion valve.

In the related art, the electronic expansion valve mainly includes a rotor, a valve rod, a nut and a valve needle; the valve rod is connected to the nut in rotation; the valve needle is arranged at the lower end of the valve rod, and the rotor drives the valve rod to move axially, and then drives the valve needle to move axially, so as to achieve the purpose of blocking and opening the valve port. However, with the above structure, when the valve port is blocked and opened, the valve needle will rotate relative to the valve port, resulting in wear of the valve needle and the valve port, thereby shortening the service life of the valve needle.

The above content is only used to assist in understanding the technical solution of the present application, and does not mean that the above content is admitted as related art.

### SUMMARY

### TECHNICAL PROBLEM

The main purpose of the present application is to provide a valve needle assembly, aiming at solving the technical problem in the related art that the valve needle will rotate relative to the valve port and cause the valve needle to be easily worn.

### TECHNICAL SOLUTION

In order to achieve the above purpose, the present application provides a valve needle assembly for an electronic expansion valve, and the valve needle assembly includes:
a valve needle provided with a first end and a second end, which is arranged opposite to the first end; the first end is detachably mounted on a valve port of the electronic expansion valve;
a bearing fixedly mounted on the second end through an outer ring; and
a valve rod inserted into an inner ring of the bearing.

In an embodiment, an opening of the second end is provided in a direction away from the first end; an installation groove is formed inside the valve needle, and the bearing is fixedly installed through the outer ring in the installation groove.

In an embodiment, the installation groove is provided with a relief space on a side of the bearing close to the first end; the valve rod is configured to pass through the bearing, and an end of the valve rod protrudes from the relief space.

In an embodiment, the installation groove is provided with a first groove section and a second groove section distributed in an axial direction, and an inner diameter of the first groove section is larger than an inner diameter of the second groove section; a limiting step is formed at a connecting portion between the first groove section and the second groove section, and the bearing is installed in the first groove section; an end surface of the outer ring of the bearing abuts against the limiting step, and the relief space is located in the second groove section.

In an embodiment, the valve needle assembly further includes: a driving collar sleeved on the end of the valve rod; the driving collar is located in the relief space and detachably abuts against on an end surface of the bearing.

In an embodiment, the driving collar includes a guide section and a connection section distributed in the axial direction; the valve rod is interference-fitted with the connection section, and the guide section is located at a side of the connection section close to the bearing; an inner diameter of the guide section gradually increases from an end close to the connection section to an end away from the connection section.

In an embodiment, the driving collar further includes a transition section located on a side of the connection section close to the bearing, and the driving collar is provided with two guide sections; the transition section is connected to the end surface of the driving collar through one of the guide sections, and connected to the connection section through the other of the guide sections.

In an embodiment, a positioning step is provided at an end of the valve needle, and the driving collar abuts against the positioning step.

In an embodiment, the bearing is fixed in the installation groove by pressure riveting.

In an embodiment, a groove wall of the first groove section includes a main body portion and a riveting portion, and the riveting portion is connected to a groove wall of the second groove section through the main body portion; a groove wall thickness of the riveting portion is smaller than a groove wall thickness of the main body portion, and the riveting portion is bent and abuts against the end surface of the outer ring of the bearing.

In an embodiment, the valve needle includes a needle body and a connection portion connected to the needle body; the first end is located at the needle body, and the second end is located at the connection portion; the needle body and the connection portion are integrally formed, or the needle body and the connection portion are formed independently and fixedly connected.

In an embodiment, the valve needle assembly further includes: an elastic member; one end of the elastic member is connected to the valve rod, and the other end of the elastic member is connected to the bearing; the valve rod is movably inserted in the inner ring of the bearing.

In an embodiment, the elastic member is configured as a spring sleeved outside the valve rod; a peripheral wall of the valve rod is provided with a flange portion on a side of the bearing away from the first end, and the spring is located between the flange portion and the end surface of the bearing.

The present application also provides an electronic expansion valve, including:
a nut provided with an installation hole; and
the valve needle assembly; the valve rod of the valve needle assembly is configured to pass through the installation hole and is threadedly connected with the nut.

The present application also provides a refrigeration device, including the electronic expansion valve.

### BENEFICIAL EFFECT

In the technical solution of the present application, when the valve rod drives the valve needle to move axially, the valve rod also rotates circumferentially at the same time. However, since the valve rod is inserted into the inner ring of the bearing, and the outer ring of the bearing is fixedly connected to the valve needle, even if the inner ring of the bearing is driven to rotate with the valve rod, the outer ring of the bearing fixedly connected with the valve needle can also remain stationary in the circumferential direction, and the valve needle will not be driven to rotate in the circumferential direction. In the present application, by cooperating the valve rod with the bearing, the circumferential motion transmitted from the valve rod to the valve needle is offset, so that the valve needle only receives the axial movement transmitted by the valve rod without rotating relative to the valve port, which is beneficial to reducing the wear between the valve needle and the valve port, thereby ensuring the reliability of the electronic expansion valve. In addition, the valve needle assembly of the present application not only has extremely high reliability, but also has the advantages of fewer parts, less assembly process and lower manufacturing cost during production.

### BRIEF DESCRIPTION OF THE DRAWINGS

In order to more clearly illustrate the technical solutions in the embodiments of the present application or the related art, the following will briefly introduce the drawings that need to be used in the description of the embodiments or the related art. Obviously, the accompanying drawings in the following description are only some embodiments of the present application, and those skilled in the art can also obtain other drawings according to the structures shown in these drawings without creative effort.
FIG. 1 is a schematic structural view of a valve needle assembly according to an embodiment of the present application.
FIG. 2 is a partial enlarged view at F in FIG. 1.
FIG. 3 is a schematic structural view of an electronic expansion valve according to an embodiment of the present application.
FIG. 4 is a partial enlarged view at A in FIG. 3.
FIG. 5 is a partial enlarged view at B in FIG. 3.
FIG. 6 is a partial enlarged view at C in FIG. 3.
FIG. 7 is a partial enlarged view at D in FIG. 3.
FIG. 8 is a partial enlarged view at E in FIG. 3.

### Explanation of reference signs:

| reference signs | name | reference signs | name |
|---|---|---|---|
| 100 | valve housing | 400 | guide collar |
| 101 | outer cover | 401 | second guide hole |
| 102 | valve seat | 402 | first relief hole |
| 103 | valve cavity | 403 | second relief hole |
| 1031 | first valve cavity | 410 | installation step |
| 1032 | second valve cavity | 411 | third step surface |
| 104 | valve port | 412 | fourth step surface |
| 105 | refrigerant passage | 413 | second guide surface |
| 110 | step space | 414 | transition surface |
| 111 | first step surface | 420 | flow guide conical surface |
| 112 | second step surface | 430 | connection surface |
| 113 | first guide surface | 440 | air passage hole |
| 200 | nut | 500 | valve needle |
| 210 | installation hole | 501 | first end |
| 211 | threaded hole | 502 | second end |
| 212 | first guide hole | 510 | needle body |
| 300 | valve rod | 511 | main body section |
| 310 | elastic member | 512 | tip |
| 320 | flange portion | 520 | connection portion |
| 330 | positioning step | 530 | installation groove |
| 600 | bearing | 531 | relief space |
| 800 | driving collar | 532 | limiting step |
| 810 | connection section | 533 | main body portion |
| 820 | guide section | 534 | riveting portion |
| 830 | transition section | 900 | magnetic rotor |

The realization, functional features and advantages of the present application will be further described in conjunction with the embodiments and with reference to the accompanying drawings.

### DETAILED DESCRIPTION OF THE EMBODIMENTS

The following will clearly and completely describe the technical solutions in the embodiments of the present application with reference to the accompanying drawings in the embodiments of the present application. Obviously, the described embodiments are only part of the embodiments of the present application, but not all of them. Based on the embodiments in the present application, all other embodiments obtained by those skilled in the art without creative efforts fall within the protection scope of the present application.

It should be noted that if there are directional indications (such as up, down, left, right, front, back...) in the embodiment of the present application, the directional indications are only used to explain the relative position relationship and movement situation between some parts in a specific posture (as shown in the attached figure). If the specific posture changes, the directional indications will also change accordingly.

The terms "connection", "installation" and "fixation" should be understood in a broad sense, for example, "connection" can be fixed connection, detachable connection, or integral connection; it can be directly connected or indirectly connected through an intermediate medium. Those skilled in the art can understand the specific meanings of the above terms in the present application according to specific situations.

In addition, if there are descriptions involving "first", "second", etc. in the embodiments of the present application, the descriptions of "first", "second", etc. are only for descriptive purposes, and cannot be interpreted as indications or hints its relative importance or implicitly indicates the number of technical features indicated. Thus, the features defined as "first" and "second" may explicitly or implicitly include at least one of these features. In addition, if the meaning of "and/or" appearing in the whole text includes three parallel schemes, taking "A and/or B" as an example, it includes scheme A, scheme B, or schemes in which both A and B are satisfied. In addition, the technical solutions of the various embodiments can be combined with each other, but it must be based on the realization of those skilled in the art. When the combination of technical solutions is contradictory or cannot be realized, it should be considered that the combination of technical solutions does not exist, nor within the protection scope required by the present application.

The present application provides an electronic expansion valve.

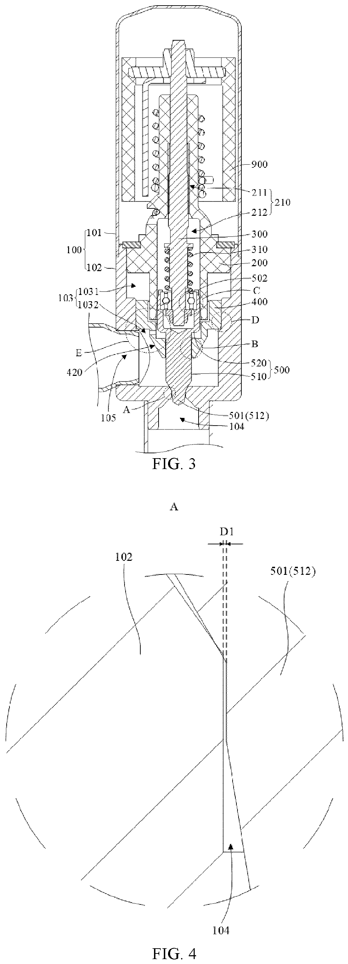

Referring to FIG. 3, the electronic expansion valve provided in the present application includes a valve housing 100, a magnetic rotor 900, a nut 200, and a valve needle assembly. The valve housing 100 includes an outer cover 101 and a valve seat 102 fixedly connected with the outer cover 101. The outer cover 101 and the valve seat 102 enclose to form a valve cavity 103. The magnetic rotor 900, the nut 200 and the valve needle assembly are all provided in the valve cavity 103, and the magnetic rotor 900 can rotate relative to the valve housing 100. The nut 200 is fixedly connected to the valve seat 102, and the magnetic rotor 900 drives the movement of the valve needle assembly to control the flow rate of the electronic expansion valve.

The structure of the valve needle assembly will be introduced below.

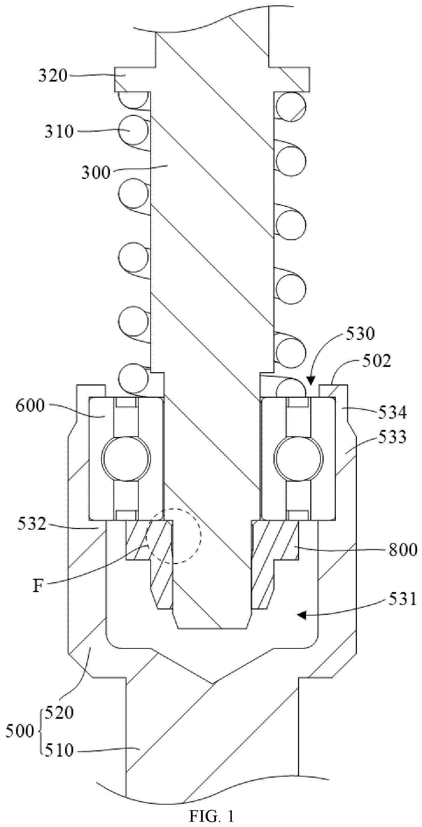

As shown in FIGS. 1 and 3, the valve needle assembly includes a valve needle 500, a bearing 600 and a valve rod 300. The valve needle 500 has an opposite first end 501 and a second end 502, and the first end 501 is used for detachably mounting on the valve port 104 of the electronic expansion valve. The bearing 600 is fixedly installed on the second end 502 through the outer ring, and the valve rod 300 is inserted into the inner ring of the bearing 600.

In the electronic expansion valve of the present application, the nut 200 is provided with an installation hole 210 extending along its axial direction, the valve needle assembly is passed through the installation hole 210, and the valve rod 300 and the nut 200 are connected threadedly. Specifically, the end of the valve rod 300 away from the first open end is provided with a threaded rod section, the installation hole 210 includes a threaded hole 211 section adapted to the threaded rod section, and the threaded rod section is matched with the threaded hole 211 section. The valve seat 102 is provided with a valve port 104 corresponding to the valve needle 500, and the valve needle 500 is detachably installed in the valve port 104. In this way, the coil drives the magnetic rotor 900 to rotate, and the magnetic rotor 900 drives the valve rod 300 to rotate. By cooperating with the threaded rod section and the threaded hole 211 section, the valve rod 300 can simultaneously perform circumferential rotation and axial movement, and the valve rod 300 drives the valve needle 500 to move axially upwards or axially downwards, thereby controlling the flow rate of the electronic expansion valve.

In the valve needle assembly of the present application, when the valve rod 300 drives the valve needle 500 to move axially, the valve rod 300 will also rotate circumferentially at the same time. However, since the valve rod 300 is inserted into the inner ring of the bearing 600, and the outer ring of the bearing 600 is fixedly connected to the valve needle 500, even if the inner ring of the bearing 600 is driven to rotate with the valve rod 300, the outer ring of the bearing 600 fixedly connected to the valve needle 500 can also keep stationary in the circumferential direction, and the valve needle 500 will not be driven to rotate in a circumferential direction. In the present application, by cooperating the valve rod 300 with the bearing 600, the circumferential motion transmitted from the valve rod 300 to the valve needle 500 is offset, so that the valve needle 500 only receives the axial movement transmitted by the valve rod 300, and does not move relative to the valve port 104, which is beneficial to reducing the wear between the valve needle 500 and the valve port 104, thereby ensuring the working reliability of the electronic expansion valve. In addition, the valve needle assembly of the present application not only has extremely high reliability, but also has the advantages of fewer parts, less assembly process and lower manufacturing cost during production.

Further, as shown in FIG. 1, the valve needle assembly further includes an elastic member 310; one end of the elastic member 310 is connected to the valve rod 300, and the other end is connected to the bearing 600; the valve rod 300 is movably inserted in the inner ring of the bearing 600. Specifically, the end of the elastic member 310 is connected to the end surface of the inner ring of the bearing 600 away from the first end 501, the valve rod 300 drives the valve needle 500 to move axially through the elastic member 310, and the valve rod 300 can at least move axially relative to the bearing 600. In this way, when the valve needle 500 touches the valve port 104, the valve rod 300 can continue to move downward relative to the valve needle 500, thereby compressing the elastic member 310, so that the elastic member 310 can provide pre-tightening force for the valve needle 500, and the valve needle 500 can stably abut against the valve port 104. Of course, in other embodiments, it is also possible that the valve rod 300 is fixedly inserted in the inner ring of the bearing 600, so that the valve rod 300 can drive the valve needle 500 to move axially through the bearing 600.

In one embodiment, the end of the elastic member 310 is connected to the end surfaces of the valve rod 300 and the inner ring of the bearing 600 by abutting or embedding. The end of the elastic member 310 may directly contact the end surface of the valve rod 300 or the inner ring of the bearing 600, or may indirectly contact the end surface of the valve rod 300 or the inner ring of the bearing 600 through other parts. Without loss of generality, as shown in FIG. 1, in this embodiment, the elastic member 310 is set as a spring. The peripheral wall of the valve rod 300 is provided with a flange portion 320, and the spring is sleeved on the valve rod 300; one end abuts against the flange portion 320, and the other end abuts against the end surface of the inner ring of the bearing 600, so as to respectively realize the connection with the valve rod 300 and the end surface of the bearing 600. Of course, in other embodiments, the elastic member 310 can also be configured as an elastic piece, an elastic rubber sleeve or an elastic silicone sleeve.

Further, please referring to FIG. 1 and FIG. 3 together, the second end 502 opens in a direction away from the first end 501, an installation groove 530 is formed inside the valve needle 500, and the bearing 600 is fixedly installed in the installation groove 530 by the outer ring. In this way, the bearing 600 will not be exposed, and the matching structure of the bearing 600 and the installation groove 530 will also be accommodated in the installation groove 530 and will not be easily impacted, which is beneficial to ensuring a stable connection between the bearing 600 and the installation groove 530. Of course, in other embodiments, it is also possible that the end surface of the second end 502 is a planar structure, and the bearing 600 is fixedly installed on the end surface of the second end 502. At this time, there is a gap on the inner ring of the bearing 600 and the end surface of the second end 502, so that the inner ring of the bearing 600 can be driven to rotate relative to the connection portion 520, which also prevent the valve needle 500 from rotating in the circumferential direction.

Further, as shown in FIG. 1, the installation groove 530 has a relief space 531 located on the side of the bearing 600 close to the first end 501, the valve rod 300 passes through the bearing 600, and the end of the valve rod 300 protrudes from the relief space 531. In this way, the end of the valve rod 300 can move toward the relief space 531 to compress the spring, thereby providing pre-tightening force for the valve needle 500. Of course, in other embodiments, it is also possible to extend the axial length of the bearing 600 to provide enough space for the axial movement of the valve rod 300, so as to ensure that the spring can be compressed in place and provide sufficient pre-tightening force to the valve needle 500.

Further, the installation groove 530 has a first groove section and a second groove section distributed in the axial direction, and the inner diameter of the first groove section is larger than the inner diameter of the second groove section. A limiting step 532 is formed at the connection between the first groove section and the second groove section, and the bearing 600 is installed in the first groove section. As shown in FIG. 1, the end surface of the outer ring of the bearing 600 abuts against the limiting step 532, and the relief space 531 is located in the second groove section. In this way, when the bearing 600 is installed into the installation groove 530, and the limiting step 532 can play a positioning role. When the bearing 600 abuts against the limiting step 532, it means that the bearing 600 is installed in place. In addition, the limiting step 532 is only in contact with the end surface of the outer ring of the bearing 600, and will not affect the circumferential rotation of the inner ring of the bearing 600, but enables relative rotation of the inner and outer rings of the bearing 600 to ensure that when the valve rod 300 rotates in the circumferential direction, the valve needle 500 can be stationary relative to the valve port 104 in the circumferential direction, thereby avoiding excessive wear of the valve needle 500 and the valve port 104.

Further, as shown in FIG. 1, the bearing 600 is fixed in the installation groove 530 by pressure riveting. Specifically, the groove wall of the first groove section includes a main body portion 533 and a riveting portion 534, and the riveting portion 534 is connected to the groove wall of the second groove section through the main body portion 533; that is, the riveting portion 534 is the end of the groove wall of the first groove section. After the bearing 600 is installed on the limiting step 532, the outer ring of the bearing 600 abuts against the groove wall surface of the first groove section, and the outer ring of the bearing 600 can be limited in the circumferential direction to further improve the installation stability of the bearing 600. Then, by bending the riveting portion 534, the riveting portion 534 abuts against the end surface of the outer ring of the bearing 600, and the bearing 600 can be riveted and fixed to the installation groove 530. The groove wall thickness of the riveting portion 534 is smaller than that of the main body portion 533, so that the riveting portion 534 can be bent with less effort, and the riveting processing of the bearing 600 can be realized more conveniently and quickly. Thus, the riveting portion 534 and the limiting step 532 limit the axial sides of the bearing 600, the groove wall of the first groove section limits the bearing 600 in the circumferential direction, and the bearing 600 can be stably fixed and installed in the installation groove 530.

In some embodiments, as shown in FIG. 1, the valve needle assembly further includes a driving collar 800 fixedly sleeved on the end of the valve needle 500. The driving collar 800 is located one side of the bearing 600 near the first end 501 and detachably abuts against the end surface of the bearing 600. In this way, when the valve rod 300 moves upward and axially, since the limit collar abuts against the end surface of the bearing 600, the limit collar is driven by the bearing 600 to move axially upward, and the bearing 600 will also move upward accordingly when it receives the thrust force. The valve needle 500 fixedly connected with the bearing 600 will also move upward accordingly. Of course, in other embodiments, it is also possible that the periphery of the end of the valve rod 300 is provided with a driving convex portion, so that when the valve rod 300 moves upward and axially, the driving convex portion pushes against the end surface of the bearing 600, which can also drive the valve needle 500 to move upward.

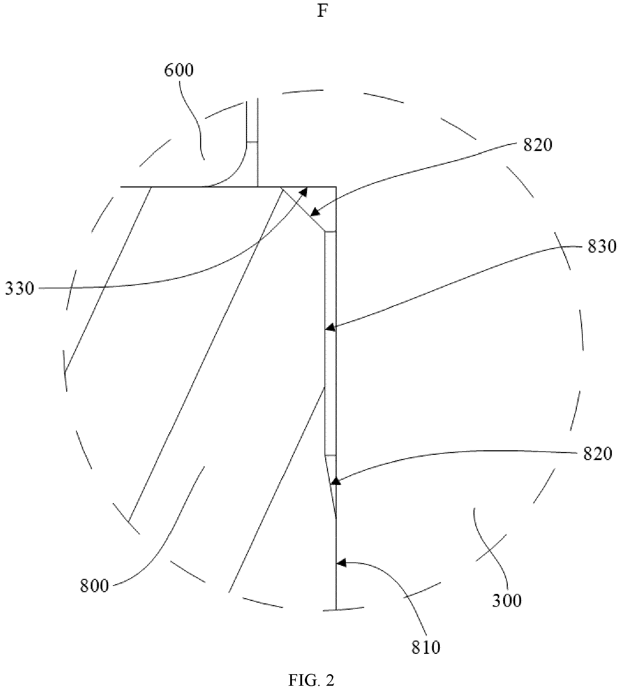

Further, please referring to FIG. 1 and FIG. 2 together, the end of the valve needle 500 is provided with a positioning step 330, and the driving collar 800 abuts against the positioning step 330. In this way, during the process of installing the driving collar 800 on the valve needle 500, the positioning step 330 can play a positioning role. When the end surface of the driving collar 800 abuts against the positioning step 330, it means that the driving collar 800 is installed in place. Of course, in other embodiments, it is also possible that a positioning step is provided inside the driving collar 800, and when the end of the valve rod 300 abuts against the positioning step, it means that the driving collar 800 is installed in place.

Further, as shown in FIG. 2, the driving collar 800 includes a guide section 820 and a connection section 810 distributed in the axial direction. The valve rod 300 is interference fit with the connection section 810, and the guide section 820 is located on a side of the connection section 810 close to the bearing 600. The inner diameter of the guide section 820 gradually increases from an end close to the connection section 810 to an end away from the connection section 810. In this way, the guide section 820 can play a guiding role during the assembly process of the valve rod 300 and the driving collar 800, so that the operation of inserting the valve rod 300 into the driving collar 800 can save labor and be faster.

Further, as shown in FIG. 2, the driving collar 800 also includes a transition section 830 located on the side of the connection section 810 close to the bearing 600, and the driving collar 800 has two sections of the guide section 820. The transition section 830 is connected to the end surface of the driving collar 800 through one guide section 820, and is connected to the connection section 810 through another guide section 820. That is, between the end close to the bearing 600 and the end away from the bearing 600 of the driving collar 800, there are a guide section 820, a transition section 830, a guide section 820 and a connection section 810 connected in sequence; the transition section 830 has a clearance fit with the valve rod 300. When assembling the driving collar 800, the valve rod 300 should be inserted from the end of the driving collar 800 close to the bearing 600, so that the end of the valve rod 300 will first contact the position with the largest inner diameter of the guide section 820 of this end of the driving collar 800, which can facilitate the alignment and snap-in of the end of the valve rod 300. Under the guidance of the guide section 820, the end of the valve rod 300 can be inserted into the transition section 830 with relatively little effort, and then passes through the transition section 830 to reach the other guide section 820, and the guide section 820 is used to guide the valve rod 300 to be inserted into the connection section 810. Since the connection section 810 is in interference fit with the valve rod 300, after the end of the valve rod 300 enters the connection section 810, it is necessary to increase force to make the valve rod 300 continue to be inserted into the driving collar 800 until the driving collar 800 abuts against the positioning step 330. In this way, the assembly of the driving collar 800 and the valve rod 300 can be realized more labor-saving and faster, which is beneficial to improving the production efficiency of the electronic expansion valve.

As shown in FIG. 3, in the electronic expansion valve of the present application, a guide collar 400 is installed in the valve cavity 103, and the guide collar 400 is located on the side of the nut 200 close to the valve port 104; the valve needle 500 passes through the guide collar 400 and is inserted into the valve port 104. Driven by the valve rod 300, the valve needle 500 is guided by the guide collar 400 along the axis, and moves toward the valve port 104 to open or close the valve port 104. It can be understood that the guide collar 400 is arranged coaxially with the valve port 104. On the one hand, the concentricity between the valve needle 500 and the valve port 104 can be improved through the restriction of the guide collar 400 on the valve needle 500; on the other hand, when the valve rod 300 drives the valve needle 500 to move, the guide collar 400 can guide the axial movement of the valve needle 500 to ensure the smooth movement of the valve needle 500. In this way, the valve needle 500 can maintain a high degree of coaxiality with the valve port 104 in both the static state and the moving state, which is beneficial to ensuring the accuracy of the opening degree control of the valve port 104, thereby ensuring the reliability of the electronic expansion valve. Moreover, under the guidance of the guide collar 400, the valve needle 500 will not move unnecessary relative to the valve port 104, thereby reducing the wear between the valve needle 500 and the valve port 104, which is beneficial to prolonging the service life of the valve needle assembly to further ensure the reliability of the electronic expansion valve.

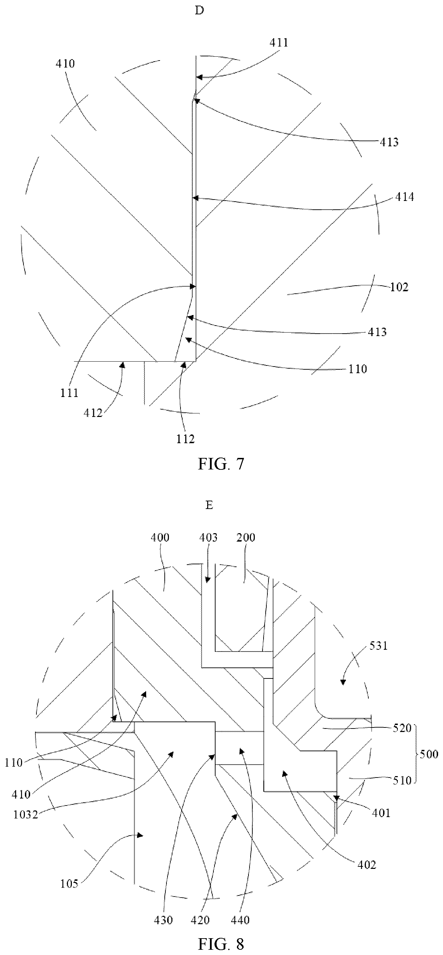

Further, in this embodiment, please referring to FIG. 3 and FIG. 8 together, the valve needle 500 includes a needle body 510 and a connection portion 520 connected with each other. After passing through the guide collar 400, the needle body 510 is inserted in the valve port 104, and the connection portion 520 has a portion located in the lumen of the nut 200. Specifically, the nut 200 is provided with a first guide hole 212, the connection portion 520 is inserted into the first guide hole 212, and has a part located in the inner cavity of the nut 200; the nut 200 provides a guidance to the axial movement of the connection portion 520 through the first guide hole 212; the guide collar 400 is provided with a second guide hole 401 for the needle body 510 to pass through, so as to guide its axial movement. It can be understood that both the first guide hole 212 and the second guide hole 401 are coaxial with the valve port 104. Because the first guide hole 212 of the nut 200 and the second guide hole 401 of the guide collar 400 have a dual limiting effect and guide effect, the coaxiality of the valve needle 500 and the valve port 104 is high, which is conducive to ensuring the accuracy of the opening control of the valve port 104, thereby ensuring the reliability of the electronic expansion valve. In particular, the depth of the second guide hole 401 is greater than or equal to 1mm, so as to meet the maximum axial movement process of the needle body 510, so that the second guide hole 401 can provide guidance effect during the axial movement of the needle body 510. In addition, in one embodiment, the needle body 510 and the connection portion 520 can be integrally formed to improve the production and processing efficiency of the valve needle 500; or, the needle body 510 and the connection portion 520 can be formed independently and is connected fixedly to simplify the structure of the mold and ensure the yield of the finished product.

In some embodiments, as shown in FIG. 8, the guide collar 400 is further provided with a first relief hole 402 that is axially distributed and communicated with the second guide holes 401. One end of the connection portion 520 connected to the needle body 510 protrudes from the inner cavity of the nut 200 and is accommodated in the first relief hole 402. Further, the guide collar 400 is also provided with a second relief hole 403, the second relief hole 403 communicates with the end of the first relief hole 402 away from the second guide hole 401, and the nut 200 is partially accommodated in the second relief hole 403. It can be understood that the second guide hole 401 of the guide collar 400 needs to guide and fit the valve needle 500, and the position of the valve needle 500 is close to the valve port 104. If the guide collar 400 is connected to the valve housing 100 through the outer wall of the second guide hole 401, it is easy to affect the flow of refrigerant near the valve port 104. In this embodiment, the first relief hole 402 of avoiding the connection portion 520 and the second relief hole 403 of avoiding the nut 200 are sequentially provided on the side of the second guide hole 401 away from the valve port 104, whereby the guide collar 400 is fixedly connected to the valve housing 100 through the outer wall of the first relief hole 402 or the outer wall of the second relief hole 403, that is, the connection structure between the guide collar 400 and the valve housing 100 has adverse effects on the flow of refrigerant.

In some embodiments, please referring to FIG. 3, FIG. 7 and FIG. 8, the outer wall of the guide collar 400 is provided with an installation step 410, and the inner wall of the valve housing 100 is correspondingly provided with a step space 110, and the installation step 410 is engaged in the step space 110. Specifically, the installation step 410 is formed on the opposite outer wall of the first relief hole 402 and the second relief hole 403, and the installation step 410 is engaged with the step space 110, so that the guide collar 400 can be fixedly installed on the valve housing 100.

Further, as shown in FIG. 8, the step space 110 is jointly formed by a connected first step surface 111 and a second step surface 112. The installation step 410 includes the third step surface 411 abutting against the first step surface 111 and the fourth step surface 412 abutting against the second step surface 112, and the first step surface 111 is arranged parallel to the axial direction of the guide collar 400. At least one of the end of the first step surface 111 away from the second step surface 112 and the end of the third step surface 411 close to the fourth step surface 412 is provided with a guide structure for guiding the installation step 410 to snap into the step space 110 when the guide collar 400 is assembled on the valve housing 100.

Specifically, in this embodiment, a first guide surface 113 is provided on the side of the first step surface 111 away from the second step surface 112, and the first guide surface 113 is gradually set away from the third step surface 411 in the direction away from the first step surface 111. Further, one end of the third step surface 411 close to the fourth step surface 412 is provided with two second guide surfaces 413, and the second guide surfaces 413 are set gradually close to the first step surface 111 in a direction away from the fourth step surface 412. A transition surface 414 is provided between the two second guide surfaces 413, and the transition surface 414 is parallel to the axial direction of the guide collar 400. The transition surface 414 is connected to the third step surface 411 through the second guide surface 413, and connected to the fourth step surface 412 through another guide surface. In order to obtain the best guiding effect, the first guide surface 113 and the second guide surface 413 can be arranged in parallel, that is, arranged in parallel or approximately parallel.

In the process of assembling the guide collar 400 on the valve housing 100, the second guide surface 413 closer to the fourth step surface 412 first enters the space inside the first guide surface 113, and then gradually snaps into the step space 110 with the installation step 410. The transition surface 414, another guide surface, and the third step surface 411 enter the space inside the first guide surface 113 successively, and at least one of the first guide surface 113 and the second guide surface 413 can play a role of guiding the assembly in this process, until the third step surface 411 is in contact with the first step surface 111. In this way, through the stepped guide structure, the process of assembling the guide collar 400 on the valve housing 100 can be made more labor-saving and faster, which is beneficial to improving the production efficiency of the electronic expansion valve.

In some embodiments, please referring to FIG. 1 and FIG. 8 together, the side wall of the valve housing 100 is provided with a refrigerant passage 105, and the guide collar 400 is provided with a flow guide conical surface 420 relative to the refrigerant passage 105. In this way, when the refrigerant flows between the refrigerant passage 105 and the valve port 104, the flow guide conical surface 420 can guide the flow of the refrigerant, avoiding the disorder of the refrigerant flow to affect the performance of the electronic expansion valve.

In some embodiments, please referring to FIG. 1, the valve cavity 103 includes a first valve cavity 1031 and a second valve cavity 1032 respectively located on both axial sides of the guide collar 400, and the guide collar 400 or The valve housing 100 is provided with a balance channel for communicating the first valve cavity 1031 and the second valve cavity 1032. Due to the setting of the balance channel, the air pressure in the first valve cavity 1031 and the second valve cavity 1032 can be balanced, which is beneficial to ensuring the stability of the internal pressure of the electronic expansion valve, and can reduce the movement resistance of the valve needle 500, thereby ensuring the work performance of the electronic expansion valve.

In one embodiment, at least one of the first step surface 111 and the third step surface 411 is recessed with a first air passage groove, and at least one of the second step surface 112 and the fourth step surface 412 is recessed with a second air passage groove connected to the first air passage groove, so as to form the balance passage in the first air passage groove and the second air passage groove. Without loss of generality, in one embodiment, the first step surface 111, the second step surface 112, the third step surface 411 and the fourth step surface 412 are all arranged in a ring shape, so that the installation step 410 and the step space 110 all correspond to a ring-shaped structure. The first step surface 111 and the third step surface 411 not only have abutting parts, but also have a part that is recessed to form the first air passage groove. Similarly, the second step surface 112 and the fourth step surface 412 not only have abutting parts, but also have a part that is recessed to form the second gas passage groove. In this way, it can not only ensure that the installation step 410 is stably engaged with the step space 110, but also form a balance passage for the first valve cavity 1031 and the second valve cavity 1032 to communicate. In this embodiment, the first valve cavity 1031 is located on the side of the guide collar 400 away from the valve port 104. The two ends of the first air passage groove are respectively connected to the first valve cavity 1031 and one end of the second air passage groove, and the other end of the second air passage groove is connected to the second valve cavity 1032. In this way, the communication between the first valve cavity 1031 and the second valve cavity 1032 can be realized, which is beneficial to ensuring the stability of the internal pressure of the electronic expansion valve, thereby ensuring the working stability of the electronic expansion valve.

In one embodiment, please referring to FIG. 1 and FIG. 8 together, the outer wall of the guide collar 400 is also provided with a connection surface 430, and the installation step 410 is connected to the flow guide conical surface 420 through the connection surface 430. The connection surface 430 is opened with an air passage hole 440 penetrating through the inner wall of the guide collar 400, so as to form the balance passage in the air passage hole 440. Specifically, there is a gap between the connection surface 430 and the inner wall surface of the valve housing 100, and the connection surface 430 is set relative to the first relief hole 402; the air passage hole 440 penetrates from the connection surface 430 to the inner wall surface of the first relief hole 402. In this way, the first valve cavity 1031 can communicate with the first relief hole 402 through the air passage hole 440. It can be understood that the first relief hole 402 is an avoidance connection portion 520, and there is a larger gap between it and the connection portion 520, while the second relief hole 403 is an avoidance nut 200, and there is a larger gap between it and the nut 200. Therefore, the spaces in the first relief hole 402 and the second relief hole 403 belong to the space of the second valve cavity 1032. The first valve cavity 1031 communicates with the first relief hole 402, that is, communicates with the second valve cavity 1032, so as to ensure the stability of the internal pressure of the electronic expansion valve, thereby ensuring the working stability of the electronic expansion valve.

Further, please referring to FIG. 3 to FIG. 6 together. Both the needle body 510 and the guide collar 400 and the needle body 510 and the valve port 104 are clearance fit. The connection 520 and the inner wall of the nut 200 are provided with a gap, and the fitting gap between the connection portion 520 and the nut 200 is greater than the minimum fitting clearance between the needle body 510 and the inner wall of the valve port 104. Moreover, the fitting gap between the needle body 510 and the guide collar 400 is greater than the minimum fitting clearance between the needle body 510 and the inner wall of the valve port 104.

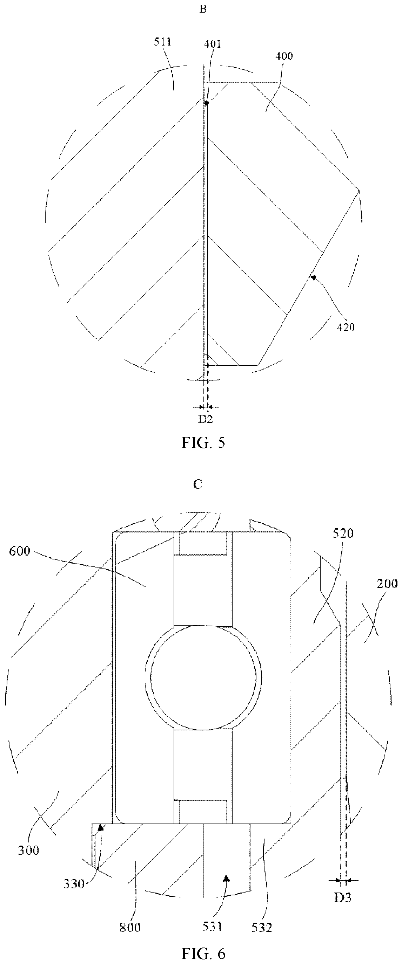

Specifically, the fitting gap between the connection portion 520 and the nut 200 is the gap between the outer wall of the connection portion 520 and the inner wall of the first guide hole 212 (i.e., D3 in FIG. 6). The needle body 510 has a main body section 511 and a tip 512 distributed along the axial direction, the main body section 511 is passed through the second guide hole 401, and is in clearance fit with the second guide hole 401; the fitting gap between the needle body 510 and the guide collar 400 is the gap between the outer wall surface of the main body section 511 and the inner wall surface of the second guide section (i.e., D2 in FIG. 5); the tip 512 is the first end 501 for inserting the valve port 104, and the tip 512 is in fit with the inner wall surface of the valve port 104 after being inserted into the valve port 104. The minimum fitting clearance between the needle body 510 and the inner wall surface of the valve port 104 is the minimum fitting clearance between the tip 512 and the inner wall surface of the valve port 104 (i.e., D1 in FIG. 4). In addition, due to the existence of the minimum fitting clearance, when the valve needle 500 closes the valve port 104, there is a certain gap between the outer wall surface of the tip 512 and the inner wall surface of the valve port 104, which can reduce the friction between the valve needle 500 and the valve port 104, and prevent the valve needle 500 from being stuck.

In the electronic expansion valve of the present application, when a foreign object is stuck between the valve port 104 and the valve needle 500, even if the tip 512 of the needle body 510 is deflected, since the fitting gap between the main body section 511 of the needle body 510 and the second guide hole 401 is greater than the minimum fitting clearance between the tip 512 and the inner wall of the valve port 104, so that there is enough room for movement between the main body section 511 and the inner wall of the second guide hole 401. The main body section 511 is driven to incline to the second guide hole 401, and will not be stuck with the second guide hole 401, but still maintains a certain gap with the inner wall of the second guide hole 401, which will not affect the up and down movement of the needle body 510. Since the gap between the outer wall surface of the connection portion 520 and the inner wall surface of the nut 200 is greater than the minimum fitting clearance between the tip 512 and the inner wall surface of the valve port 104, there is also an enough space for movement between the connection portion 520 and the first guide hole 212 of the nut 200. Similarly, after the connection portion 520 is driven and inclined relative to the inner wall of the first guide hole 212, it will not be stuck with the first guide hole 212, and a certain gap is still maintained between the connection portion 520 and the inner wall of the first guide hole 212, so that the overall up and down movement of the valve needle 500 will not be affected. In summary, when a foreign object is stuck between the tip 512 of the valve needle 500 and the valve port 104, since the main body section 511 of the valve needle 500 is in the inner cavity of the guide collar 400, and the connection portion 520 has a sufficient deviation space in the inner cavity of the nut 200, the valve needle 500 can still move smoothly in the up and down direction, thus effectively preventing the valve needle 500 from being stuck; and at the same time the eccentric alignment of the valve needle 500 caused by the deviation of the coaxiality is avoided during the assembly process of the valve needle assembly.

Further, in this embodiment, the fitting gap between the connection portion 520 and the nut 200 is greater than the fitting gap between the needle body 510 and the guide collar 400, that is, the fitting gap D3 between the outer wall surface of the connection portion 520 and the inner wall surface of the first guide hole 212 is larger than the gap D2 between the outer wall surface of the main body section 511 and the inner wall surface of the second guide hole 401. It can be understood that when the valve port 104 is opened, the tip 512 of the needle body 510 breaks away from the valve port 104. At this time, if a foreign object is caught in the gap between the main body section 511 and the second guide hole 401, even if the main body section 511 is inclined opposite to the second guide hole 401, and drives the connection portion 520 to tilt relative to the first guide hole 212, the connection portion 520 will not be stuck with the first guide hole 212, but still maintains a certain gap with the inner wall of the first guide hole 212. In this way, the overall up and down movement of the valve needle 500 will not be affected.

Further, in this embodiment, as shown in FIG. 1, the installation hole 210 further includes a threaded hole 211, and the threaded hole 211 is located on a side of the first guide hole 212 away from the valve port 104. One end of the valve rod 300 is drivingly connected to the connection portion 520, and the other end of the valve rod 300 is threadedly connected to the threaded hole 211. In this way, the coil drives the magnetic rotor 900 to rotate, and the magnetic rotor 900 drives the valve rod 300 to rotate. By cooperating with the thread of the nut 200, the valve rod 300 can perform circumferential rotation and axial movement synchronously, and the valve rod 300 drives the valve needle 500 to move axially upward or downward, thereby controlling the flow rate of the electronic expansion valve. The threaded section of the valve rod 300 fits with the threaded hole 211 in a clearance, so that the valve rod 300 can have a certain movement deviation in the radial direction relative to the nut 200, and the valve rod 300 and the nut 200 can further absorb the concentric deviation to improve the overall coaxiality.

In this embodiment, the fitting gap between the valve rod 300 and the threaded hole 211 is larger than the fitting gap (i.e., D3) between the connection portion 520 and the first guide hole 212. It can be understood that the valve rod 300 is coaxially matched with the valve needle 500, and when the connection portion 520 is inclined relative to the first guide hole 212, due to the minimum fitting clearance between the valve rod 300 and the nut 200 appears between the threaded section of the valve rod 300 and the threaded hole 211, this gap value is greater than the fitting gap between the connection portion 520 and the first guide hole 212. Thus, there is enough space for movement between the valve rod 300 and the threaded section and the threaded hole 211, even if the valve rod 300 is driven to be inclined relative to the nut 200, the threaded section of the valve rod 300 will not be stuck with the threaded hole 211 of the nut 200, and will not affect the up and down movement of the valve needle assembly of the electronic expansion valve.

The present application also provides a refrigeration device, which includes an electronic expansion valve. For the specific structure of the electronic expansion valve, please referring to the above-mentioned embodiments. Since this refrigeration device adopts all the technical solutions of all the above-mentioned embodiments, it has at least all the beneficial effects brought by the technical solution of the above-mentioned embodiments, which will not be repeated here. The refrigeration device may be an air conditioner, a freezer, a refrigerator, a heat pump water heater, and the like.

The above are only optional embodiments of the present application, and are not intended to limit the patent scope of the present application. Under the inventive concept of the present application, the equivalent structural transformations made by using the description of the application and the contents of the accompanying drawings, or direct/indirect applications in other relevant technical fields are included in the patent protection scope of the present application.

## Claims

1. A valve needle assembly for an electronic expansion valve, **characterized by** comprising:
a valve needle provided with a first end and a second end which is arranged opposite to the first end, wherein the first end is detachably mounted on a valve port of the electronic expansion valve;
a bearing fixedly mounted on the second end through an outer ring; and
a valve rod inserted into an inner ring of the bearing.

2. The valve needle assembly according to claim 1, wherein an opening of the second end is provided in a direction away from the first end; an installation groove is formed inside the valve needle, and the bearing is fixedly installed through the outer ring in the installation groove.

3. The valve needle assembly according to claim 2, wherein the installation groove is provided with a relief space on a side of the bearing close to the first end; the valve rod is configured to pass through the bearing, and an end of the valve rod protrudes from the relief space.

4. The valve needle assembly according to claim 3, wherein the installation groove is provided with a first groove section and a second groove section distributed in an axial direction, and an inner diameter of the first groove section is larger than an inner diameter of the second groove section; a limiting step is formed at a connecting portion between the first groove section and the second groove section, and the bearing is installed in the first groove section; an end surface of the outer ring of the bearing abuts against the limiting step, and the relief space is located in the second groove section.

5. The valve needle assembly according to claim 3, further comprising: a driving collar sleeved on the end of the valve rod; wherein the driving collar is located in the relief space and detachably abuts against an end surface of the bearing.

6. The valve needle assembly according to claim 5, wherein the driving collar comprises a guide section and a connection section distributed in the axial direction; the valve rod is interference-fitted with the connection section, and the guide section is located at a side of the connection section close to the bearing; an inner diameter of the guide section gradually increases from an end close to the connection section to an end away from the connection section.

7. The valve needle assembly according to claim 6, wherein the driving collar further comprises a transition section located on a side of the connection section close to the bearing, and the driving collar is provided with two guide sections ; the transition section is connected to the end surface of the driving collar through one of the guide sections , and connected to the connection section through the other of the guide sections.

8. The valve needle assembly according to claim 5, wherein a positioning step is provided at an end of the valve needle, and the driving collar abuts against the positioning step.

9. The valve needle assembly according to claim 4, wherein the bearing is fixed in the installation groove by pressure riveting.

10. The valve needle assembly according to claim 9, wherein a groove wall of the first groove section comprises a main body portion and a riveting portion, and the riveting portion is connected to a groove wall of the second groove section through the main body portion; a groove wall thickness of the riveting portion is smaller than a groove wall thickness of the main body portion, and the riveting portion is bent and abuts against an end surface of the outer ring of the bearing.

11. The valve needle assembly according to claim 1, wherein the valve needle comprises a needle body and a connection portion connected to the needle body; the first end is located at the needle body, and the second end is located at the connection portion; the needle body and the connection portion are integrally formed, or the needle body and the connection portion are formed independently and fixedly connected.

12. The valve needle assembly according to any one of claims 1 to 11, further comprising: an elastic member; wherein one end of the elastic member is connected to the valve rod, and the other end of the elastic member is connected to the bearing; the valve rod is movably inserted in the inner ring of the bearing.

13. The valve needle assembly according to claim 12, wherein the elastic member is configured as a spring sleeved outside the valve rod; a peripheral wall of the valve rod is provided with a flange portion protruding on a side of the bearing away from the first end, and the spring is located between the flange portion and an end surface of the bearing.

14. An electronic expansion valve, **characterized by** comprising:
a nut provided with an installation hole; and
a valve needle assembly according to any one of claims 1 to 13, wherein the valve rod of the valve needle assembly is configured to pass through the installation hole and is threadedly connected with the nut.

15. A refrigeration device, **characterized by** comprising an electronic expansion valve according to claim 14.
